# EUROPÄISCHE PATENTSCHRIFT

(11) **EP 1 452 828 B1**
(45) Veröffentlichungstag und Bekanntmachung des Hinweises auf die Patenterteilung: **26.04.2006**
(21) Anmeldenummer: 04002131.3
(22) Anmeldetag: 02.02.2004
(51) Int. Cl.: G01B 7/30, G01D 5/245, G01D 5/249, G01D 5/251

(54) **Multiturn-Drehgeber**
Multiturn rotary encoder
Codeur de rotation multitour

(30) Priorität: 28.02.2003 DE 10308683
(43) Veröffentlichungstag der Anmeldung: 01.09.2004
(73) Patentinhaber: SICK STEGMANN GmbH, 78166 Donaueschingen (DE)
(72) Erfinder: Stobbe, Willibald, 78166 Donaueschingen (DE); Mutschler, Reinhold, 78056 Villingen-Schwenningen (DE)
(74) Vertreter: Ludewigt, Christoph

(56) Entgegenhaltungen:
- EP-A- 0 449 037
- DE-A- 4 229 610
- DE-A- 19 902 736

## Beschreibung

Die Erfindung betrifft einen Multitum-Drehgeber gemäß dem Oberbegriff des Anspruchs 1.

Zur Messung von Drehwinkein vorrangig im Bereich der industriellen Regelung und Steuerung von Anlagen und Elektromotoren werden Drehwinkelmessgeräte, sogenannte Drehgeber, eingesetzt. Je nach Anwendungsfall, Umgebungsbedingungen und geforderter Messgenauigkeit werden optische, magnetische oder Systeme anderer Technologien eingesetzt.

Prinzipiell besteht ein Drehwinkelmesssystem aus einem Maßstab, auch Maßverkörperung genannt, das als Messnormal fungiert, sowie aus einem Sensor, dem sogenannten Abtaster, der durch Detektion des Maßstabes Signale generiert, die nach einer Datenverarbeitung einen Messwert für die Winkellage ergeben.

Dabei wird zwischen inkrementalen und absoluten Messsystemen unterschieden. Inkrementale Messeinrichtungen erzeugen durch das Zählen von periodischen Winkeldifferenzen, den sogenannten Inkrementen, Signale, die Informationen über Winkeländerungen geben. Diese Signale ergeben durch Vorwärts- / Rückwärtszählen einen Winkelwert, gerechnet ab einem Anfangswert, der sogenannten Referenz- oder Nullposition.

Demgegenüber weisen absolute Messsysteme codierte Maßstäbe auf, die an jeder Position auch ohne eine Bewegung einen Positions- bzw. Winkelwert ausgeben. Als absolute optische Codierungen werden für Positionscodierungen vorrangig der sogenannte Gray-Code, der Binär-Code als mehrspurige Codes oder Pseudo-Random-Codes als einspuriger Code verwendet. Als magnetische Codierungen können auch Nonius-Codes als mehrspurige Codes verwendet werden.

Neben sogenannten Singleturn-Drehgebem, welche lediglich eine Umdrehung inkremental oder absolut erfassen, existieren sogenannte Multiturn-Drehgeber, die mehrere Umdrehungen absolut erfassen, d.h. nach dem Einschalten steht der genaue Positions- bzw. Winkelwert sowie die Anzahl der Umdrehungen unmittelbar zur Verfügung.

Hierzu werden nach dem Stand der Technik mehrere optische, magnetische Maßstäbe oder Maßstäbe anderer Technologien mittels Untersetzungs-Getriebestufen miteinander verbunden, wobei die erste Getriebestufe an der Welle anliegt. Die untersetzten Maßstäbe werden, ebenso wie der direkt mit der Drehgeberwelle verbundene Maßstab, absolut abgetastet.

In der DE 100 60 574 A1 ist beispielsweise ein mehrere Umdrehungen absolut erfassendes Messsystem dargestellt. Dieses nutzt mehrere untersetzte Getriebestufen, deren Winkellage jeweils separat abgetastet wird.

Die Nachteile einer derartigen konstruktiven Lösung zur Ermittlung von mehreren Umdrehungen liegen in der großen Bauform, in der beschränkten zulässigen Betriebs-Drehzahl bzw. der beschränkten Lebensdauer, bedingt durch die Zahnrad-Untersetzungs-Getriebe.

Insbesondere lässt sich eine derartige Konstruktion nur aufwendig miniaturisieren. Darüber hinaus vermindern die Zahnrad-Untersetzungsgetriebe als bewegte Sensorteite die Lebensdauer und beschränken die zulässige und mögliche Betriebsdrehzahl.

Des weiteren sind sogenannte "zählende" Multitum-Drehgeber bekannt, die ohne Getriebestufen auskommen. Um mehrere Umdrehungen messen zu können, werden die Umdrehungen ermittelt, gezählt und die Anzahl der Umdrehungen werden in einem Speicherbereich abgelegt. Um die Umdrehungs-Richtung erkennen zu können, muss die mindestens eine Markierung von mindestens zwei beabstandeten Sensoren detektiert werden. Als Markierungen können etwa Magnete dienen, die von Magnetsensoren detektiert werden. Hier können neben Reed-Sensoren etwa Impulsdraht-Sensoren, GMR- oder AMR-Sensoren, Hall-Sensoren oder andere Magnetsensoren zum Einsatz kommen. Hierbei ist insbesondere zu beachten, dass das Messsystem auch im spannungslosen Zustand (Power-Off-Modus) die Umdrehungen ermitteln muss. Hierzu werden die für das Messen und die Speicherung notwendigen Schaltungsteile batteriegepuffert betrieben (Pufferbetrieb oder Low-Power-Modus).

Ein entsprechender Umdrehungszähler, der Reedkontakte als Schaltelemente benutzt, ist beispielsweise in der DE 100 01 676 C1 beschrieben.

Der Nachteil der Reedschalter ist die geringe Lebensdauer, da jede Umdrehung im Betrieb mindestens eine Schaltung verursacht und somit die Lebensdauer vermindert.

Aus der DE 42 29 610 A1 ist ein gattungsgemäßer Drehgeber bekannt, der zwei Abtasteinheiten aufweist, wovon die eine die Position der Geberwelle und die andere vollständige Umdrehungen der Geberwelle erfasst.

Aus der DE 40 11 949 A1 ist eine Magnettauchsonde bekannt, die Magnetschalter aufweist, denen Spulen zugeordnet sind, um die Magnetschalter überprüfen zu können.

Ausgehend von diesem Stand der Technik liegt der Erfindung die Aufgabe zugrunde, einen einfachen, kostengünstigen und kompakten Multiturn-Drehgeber bereitzustellen, welcher die oben dargestellten Nachteile vermeidet.

Die Erfindung sieht dazu vor, bei einem Multitum-Drehgeber mit einer ersten Abtasteinheit zur Bestimmung der Winkellage und/oder Änderung der Winkellage der Welle und einer zweiten Abtasteinheit zur Bestimmung der Anzahl der Umdrehungen der Welle, einem Magnetschaltelement der zweiten Abtasteinheit wenigstens eine Spule zuzuordnen, die im eingeschalteten Zustand des Multiturn-Drehgebers bestromt ist und im Batteriebetrieb nicht bestromt ist.

Mittels der Spule kann im eingeschalteten Zustand des Multiturn-Drehgebers ein Schalten der Magnetschaltelemente unterdrückt werden, wodurch die Lebensdauer des Magnetschaltelements erheblich verlängert werden kann. Das Magnetschaltelement und damit die zweite Abtasteinheit wird nur im Batteriebetrieb aktiviert, womit die Lebensdauer des nur zeitweise eingesetzten Magnetschaltelements derart erhöht werden kann, dass diese deutlich über der Lebensdauer der die Sensor-Lebensdauer begrenzenden Bauteile liegt. Selbstverständlich muss das Magnetfeld der Spule im eingeschalteten Zustand hinreichend groß sein, so dass das magnetische Schaltfeld ständig unterhalb der Abfallfeldstärke des Magnetschaltelements liegt.

Um auch im eingeschalteten Zustand (Power-On Modus) des Drehgebers die Gesamt-Umdrehungen ermitteln zu können ist vorteilhafterweise vorgesehen, die Gesamt-Umdrehungen aus dem absoluten Messergebnis für eine 360°-Umdrehung durch Aufzählung der einzelnen Vorwärts- und Rückwärts-Umdrehungen durch die erste Abtasteinheit zu ermitteln. Im ausgeschalteten Zustand des Drehgebers (Power-Off Modus) wird die zweite, magnetische Abtasteinheit zur Ermittlung der Umdrehungen eingesetzt, die vorzugsweise wenig elektrische Energie benötigt.

Die erfindungsgemäße Ausgestaltung stellt eine einfache und daher kostengünstige und sehr zuverlässige Lösung zur Bestimmung der Umdrehungen der Welle im aus- und eingeschalteten Zustand des Drehgebers dar.

Als einsetzbare Magnetschaltelemente kämen prinzipiell die verschiedensten Sensoren, wie Hall-, AMR- oder GMR-Sensoren, in Betracht, jedoch verbrauchen diese im Betrieb vergleichsweise viel Energie, so dass vorteilhafterweise als Magnetschaltelement ein Reed-Schalter eingesetzt wird.

In konstruktiv einfacher Weise kann das magnetische Schaltfeld der zweiten Abtasteinheit von einem Permanentmagneten erzeugt sein, wobei vorteilhafterweise der Permanentmagnet fest mit einer Welle des Drehgebers verbunden ist. Das Magnetschaltelement ist dann ortsfest im Drehgebergehäuse vorgesehen. Bei jeder Umdrehung der Welle wird der Permanentmagnet an dem Magnetschaltelement vorbeigeführt.

Alternativ könnte der Permanentmagnet wie das Magnetschaltelement drehgebergehäusefest gelagert sein, wobei dann das magnetische Schaltfeld durch auf einer Maßverkörperung aufgebrachtes ferromagnetisches Material, das an dem Permanentmagneten vorbeibewegt wird, veränderbar ist.

Zur Erkennung der Umdrehungsrichtung auch im Power-Off Modus sind in Weiterbildung der Erfindung zwei Magnetschaltelemente vorgesehen.

Um einen erhöhten Stromverbrauch des Drehgebers zu vermeiden, wird in Weiterbildung der Erfindung im eingeschalteten Zustand des Drehgebers der gesamte oder ein Teil des Versorgungsstromes des Drehgebers über die Spule geleitet. Dabei kann die Spule als Drosselspule für die Dämpfung von hochfrequenten Schwingungen auf der Versorgungsleitung dienen. Eine in der Regel aufgrund von EMV-Anforderungen (Elektromagnetische Verträglichkeit) notwendige Drosselspule im Stromversorgungs-Eingang des Drehgebers kann entfallen, da die erfindungsgemäß vorgesehene Spule diesen Zweck übernehmen kann.

In Weiterbildung der Erfindung kann der Multitum-Drehgeber sich in gewisser Weise selbst testen. Dazu ist vorgesehen, dass die Funktionalität des Magnetschaltelements bei Betriebsbeginn verifizierbar ist, indem nach Einschalten des Multiturn-Drehgebers die Spule zunächst stromlos bleibt, und dass der Schaltpunkt des Magnetschaltelements verglichen wird mit den jeweiligen Positionssignalen der ersten Abtasteinheit und dass bei Abweichungen des Schaltpunkts des Magnetschaltelements zu den Positionssignalen um mehr als eine definierte Positionsdifferenz ΔP ein Fehlersignal ausgegeben wird.

Im Folgenden wird die Erfindung anhand eines Ausführungsbeispiels unter Bezugnahme auf die Zeichnung im Einzelnen erläutert. In der Zeichnung zeigen:
- **Fig. 1**: eine erste Ausführungsform eines erfindungsgemäßen Multitum-Drehgebers;
- **Fig. 2**: eine schematische Darstellung einer Anordnung mit einem Schaltmagneten und zwei Reed-Schaltem mit zugeordneten Spulen zur Funktionserläuterung;
- **Fig. 3**: eine zweite Ausführungsform eines erfindungsgemäßen Multitum-Drehgebers;
- **Fig. 4**: eine schematische Darstellung einer Welle mit zwei magnetischen Abtasteinheiten;
- **Fig. 5 und 6**: Schaltbilder von Verschaltungen erfindungsgemäß eingesetzter Spulen.

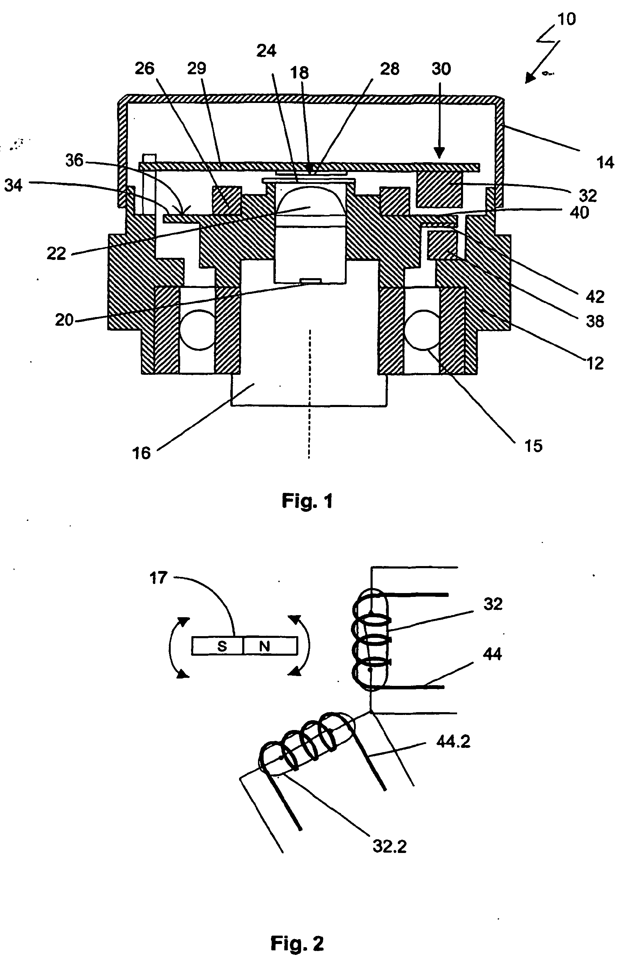

Ein in Fig. 1 schematisch im Querschnitt dargestellter Multiturn-Drehgeber 10, im Folgenden kurz Drehgeber 10 genannt, weist ein ortsfestes Gehäuse 12 mit einem Gehäusedeckel 14 auf. Über ein Kugellager 15 ist in dem Gehäuse 12 eine Welle 16 gelagert, deren Umdrehungen und Winkelstellung mit dem Drehgeber 10 gemessen werden.

Zur Ermittlung der Winkelstellung der Welle 16 weist der Drehgeber 10 eine an sich bekannte erste Abtasteinheit 18 auf, die Positionssignale, bevorzugt drehrichtungsdiskreminierende, generiert, welche die Winkellage und/oder die Änderung der Winkellage der Welle 16 beschreiben.

Die in diesem ersten Ausführungsbeispiel des Drehgebers 10 vorgesehene erste Abtasteinheit 18 entspricht der in der DE 197 50 474 C2 beschriebenen, auf die hiermit Bezug genommen wird. Die erste Abtasteinheit 18 weist einen Lichtsender 20, eine dem Lichtsender 20 zugeordnete Kollimatorlinse 22 und eine Codescheibe 24 auf, die alle mit der Welle 16 verdrehfest und koaxial verbunden sind. Über eine Induktionsspule 26 ist der Lichtsender 20 mit Energie versorgbar. Weiter umfasst die erste Abtasteinheit 18 einen Lichtempfänger 28, der gehäusefest auf einer Platine 29 befestigt ist. Auf diese Weise kann das vom Lichtsender 20 ausgesandte und von der Kollimatorlinse 22 auf den Lichtempfänger 28 gerichtete Licht durch die Codescheibe 24 entsprechend der Winkelstellung der Codescheibe 24 beeinflusst werden, was der Lichtempfänger 28 registriert und durch eine geeignete Auswerteelektronik in Positionssignalen ausgegeben werden kann, die der Winkellage und/oder Änderung der Winkellage entsprechenden.

Desweiteren weist der Drehgeber eine zweite Abtasteinheit 30 auf zur Messung der Anzahl vollständiger Umdrehungen. Die zweite Abtasteinheit 30 der ersten Ausführungsform aus Fig. 1 weist ein auf der Platine gehäusefest angeordnetes Magnetschaltelement, beispielsweise ein Reed-Schalter 32, an dem ein Außenbereich 34 einer mit der Welle 16 drehfest verbundenen Scheibe 36 als Maßverkörperung vorbeigeführt wird. Der Außenbereich 34 der Scheibe 36 dreht sich zwischen dem Reed-Schalter 32 und einem gehäusefest angeordnetem Magneten, vorzugsweise ein Permanentmagneten 38, durch. Auf einem Teilstück 40 des Außenbereiches 34 ist eine ferromagnetische Schicht 42 aufgebracht, so dass das Magnetfeld des Permanentmagneten 38 am Ort des Reed-Schalters 32 davon abhängig ist, ob die ferromagnetische Schicht sich 42 zwischen dem Reed-Schalter 32 und dem Permanentmagneten 38 befindet oder nicht, so dass dadurch ein Schalten des Reed-Schalters 32 bei Drehung der Welle 16 bewirkt werden kann. Die ferromagnetische Schicht 42 kann sich beispielsweise über den halben Umfang erstrecken.

Damit mittels der zweiten Abtasteinheit nicht nur die Anzahl der Umdrehungen sondem auch die Drehrichtung ermittelt werden kann, sind zwei Magnetschaltelemente vorgesehen, von dem in der Schnittebene der Fig. 1 nur eines, nämlich der Reed-Schalter 32, erkennbar ist. In der sehr schematischen Darstellung der Fig. 2, anhand derer die Funktionsweise der Erfindung noch beschrieben wird, ist ein solches zweites Magnetschaltelement, ein Reed-Schalter 32.2 dargestellt.

Erfindungsgemäß ist dem Reed-Schalter 32 bzw. 32.2 wenigstens eine Spule 44 bzw. 44.2 zugeordnet, wie dies anhand der Fig. 2 dargestellt ist. Vorzugsweise ist der Reed-Schalter 32 im Inneren der Spule 44 angeordnet, so dass er die maximale Magnetfeldstärke des durch die Spule 44 erzeugbaren Magnetfeldes erfahren kann.

Die Spule 44 bzw. 44.2 hat die Funktion, das Magnetschaltelement, also den oder die Reed-Schalter 32, im eingeschalteten Zustand des Drehgebers 10, also wenn dieser an eine Stromversorgung angeschlossen ist, zu blockieren, was dadurch erreicht wird, dass die Spule 44 bestromt wird und dadurch, aufgrund des durch die Spule 44 erzeugten Magnetfeldes, ein Schalten des Reed-Schalters 32 unterdrückt wird. Dazu muss selbstverständlich das erzeugte Magnetfeld hinreichend groß sein, so dass das durch den Permanentmagneten 38 und der magnetischen Maßverkör perung erzeugte Schaltfeld kein Schalten bewirken kann. Da die Reed-Schalter dann nicht mehr schalten, muss im eingeschalteten Zustand die Umdrehungsrichtung und die Anzahl der Umdrehungen durch die erste Abtasteinheit bestimmt wer den, also durch Zählen der Positionssignale. In einem entsprechenden Speicher sollte die Anzahl der Umdrehungen und die Umdrehungsrichtung abspeicherbar sein.

Diese Funktionsweise der Spule 44 bzw. 44.2 sei nochmal anhand der Fig. 2 erläutert. Die Änderung des Magnetfeldes bei Drehung der Welle wird hier vereinfacht durch einen sich drehenden Magneten 17 verdeutlicht. Dann schaltet jeder der beiden Reed-Schalter 32 und 32.2 bei ausgeschalteten Spulen zweimal je volle Umdrehung entsprechend folgender Tabelle, die den Schaltzustand des Reed-Schalters 32 bzw. 32.2 in Abhängigkeit der Magnetstellung angibt.

| Magnetstellung | Spule 44 bzw. 44.2 | Reed-Schalter 32 bzw. 32.2 |
|---|---|---|
| N | aus | offen |
| S | aus | offen |
| N-S | aus | geschlossen |
| S-N | aus | geschlossen |
| N | ein | geschlossen |
| S | ein | geschlossen |
| N-S | ein | geschlossen |
| S-N | ein | geschlossen |

Die Magnetstellung "N" bzw. "S" bedeutet, dass der jeweilige Pol dem Reed-Schalter am nächsten ist, also der dargestellten Magnetstellung in bezug auf Reed-Schalter 32 entspricht. Die Magnetstellung "N-S" entspricht der in Fig. 2 dargestellten Magnetstellung in bezug auf den Reed-Schalter 32.2.

Im ausgeschalteten Zustand des Drehgebers 10, also wenn dieser im Low-Power Modus oder Batteriebetrieb läuft, wird die Spule 44 nicht von Strom durchflossen und erzeugt kein Magnetfeld, so dass dann der Reed-Schalter 32 schalten kann und die Umdrehungen gezählt werden können. Beim Wiederanschalten kann die aktuelle Winkelstellung durch die erste Abtasteinheit ermittelt werden.

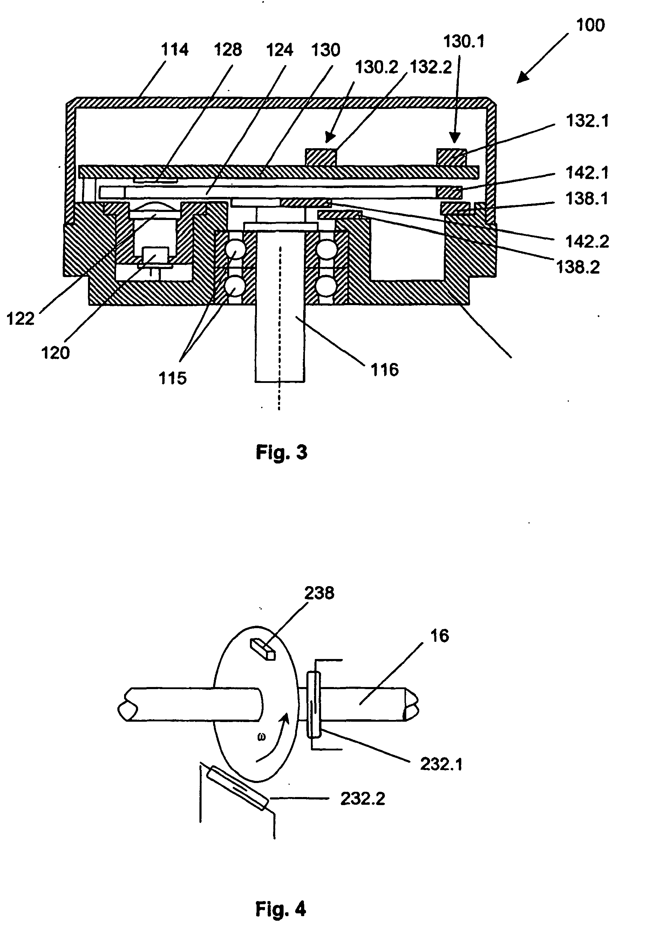

Andere Ausführungsformen der ersten und zweiten Abtasteinheiten sind denkbar. So ist in der in Fig. 3 dargestellten Ausführungsform des Drehgebers 10, bei dem Teile mit gleicher Funktion wie in der ersten Ausführungsform mit um 100 erhöhtem Bezugszeichen versehen sind, die erste Abtasteinheit nicht koaxial innerhalb der Welle 116 angeordnet, sondern azentrisch. Lichtsender 120 und Kollimatorlinse 122 sind gehäusefest gegenüber dem Lichtempfänger 128 angeordnet. Die Codescheibe 124 dreht sich zwischen Kollimatorlinse 122 und Lichtempfänger 128 durch.

Das zweite Ausführungsbeispiel zeigt auch eine andere Anordnung der zweiten Abtasteinheit 130, die hier aus zwei Einheiten 130.1 und 130.2 besteht, wobei die Einheiten 130.1 und 130.2 ähnlich wie im ersten Ausführungsbeispiel aufgebaut sind, also mit Reed-Schalter 132.1 und 132.2, Permanentmagnet 138.1 und 138.2 sowie einer magnetischen Maßverkörperung 142.1 und 142.2. Wenn die beiden Maßverkörperungen 142.1 und 142.2 unterschiedlich ausgebildet sind, kann mit dieser zweiten Abtasteinheit die Umdrehungsrichtung und die Anzahl der Umdrehungen bestimmt werden.

Weitere Ausführungen der zweiten Abtasteinheit sind denkbar. So kann z.B. in einfachster Weise, die zweite Abtasteinheit aus einen mit der Welle 16 drehfest verbundenem Permanentmagneten 238 und zwei in verschiedenen Winkelstellungen angeordneten Reed-Schaltern 232.1 und 232.2 bestehen, wie dies in der schematischen Darstellung der Fig. 4 angedeutet ist. Der Einfachheit halber Wurden in der Darstellung die Spulen nicht gezeichnet.

Auch sind verschiedenste Ausführungsformen der ersten Abtasteinheit denkbar. Zur Messung der Winkellage der Welle ist auch die Nutzung eines Drehwinkelgebers mit magnetischem Maßstab möglich oder Drehwinkelmessgeräte, die andere physikalische Technologien einsetzten, wie etwa impedanz-potentiometrische, induktive oder kapazitive Maßstäbe und entsprechende Abtast- und Signalverarbeitungs-Verfahren.

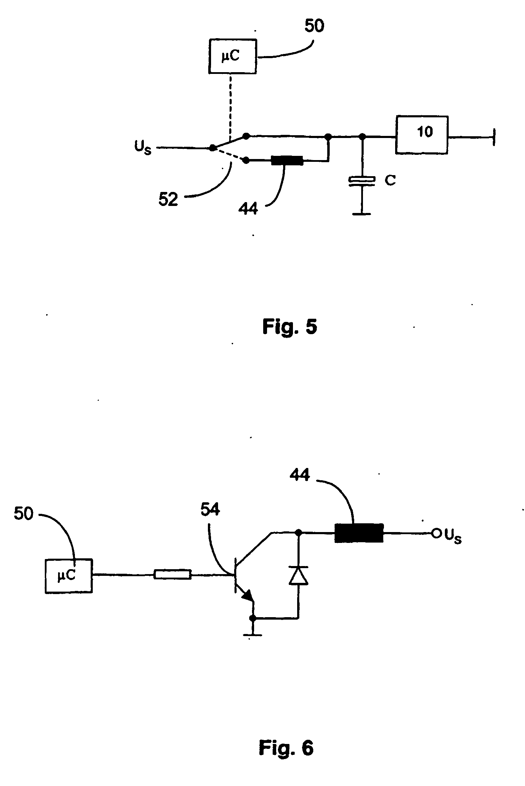

Vorteilhafterweise erfüllt die Spule 44 im bestromten Zustand neben ihrer Funktion, den Reed-Schalter zu halten, gleichzeitig die Dämpfung unerwünschter elektromagnetischer Störeinwirkungen am Spannungseingang. Dazu wird der Versorgungsstrom für den Drehgeber 10 über die Spule 44 geleitet. Dies ist schematisch in Fig. 5 dargestellt. Die Versorgungsspanung Us liegt unmittelbar an der Spule 44 an, so dass der Versorgungsstrom für den Drehgeber 10 über die Spule 44 fließt. Dadurch können hochfrequente Schwingungen auf der Versorgungsleitung gedämpft werden.

Beim Einschalten des Drehgebers 10 kann der Reed-Schalter bzw. können die Reed-Schalter wie folgt auf ihre Funktionalität überprüft werden. Unmittelbar nach dem Einschalten des Drehgebers 10 wird die Spule 44 bzw. werden die Spulen mittels einer Bypass-Schaltung, wie sie beispielhaft in Fig. 5 dargestellt ist, zunächst nicht bestromt. Dies wird über einen Microcontroller 50, der einen Schalter 52 betätigt, realisiert. Alternativ können die Spulen statt durch den als Bypass dienenden Schalter 52 z.B. durch einen durch den Microcontroller 50 gesteuerten Transistor 54 geschaltet werden, wie dies in Fig. 6 dargestellt ist. Diese Schaltung ist zu wählen, wenn wegen des hohen Spulenwiderstandes auf die Funktion der Spule 44 als Filterdrossel verzichtet werden muss.

Anschließend werden die Schaltpunkte der Reed-Schalter ermittelt und mit den absoluten Winkelpositionswerten der Welle 16 verglichen. Liegen die Schaltpunkte der Reed-Schalter im festgelegten Toleranzbereich, so werden die Spulen 44 bestromt und ein Umschalten der Reed-Schalter erfindungsgemäß verhindert. Liegen die Schaltpunkte der Reed-Schalter außerhalb des Toteranzbereiches AP, so kann beispielsweise vorgesehen werden, einen Fehlercode auszugeben.

## Patentansprüche

1. Multiturn-Drehgeber mit einer Maßverkörperung, welche mit einer Welle (16) verdrehfest verbunden ist und die mittels einer ersten Abtasteinheit (18) abgetastet wird, die Positionssignale generiert, welche die Winkellage oder die Änderung der Winkellage der Welle (16) beschreiben und mit einer zweiten Abtasteinheit (30) zur Messung der Anzahl der Umdrehungen der Welle (16), wobei die zweite Abtasteinheit (30) wenigstens einen Magneten (38) und wenigstens ein Magnetschaltelement (32) aufweist, **dadurch gekennzeichnet, dass** dem Magnetschaltelement (32) wenigstens eine Spule (44) zugeordnet ist, die im eingeschalteten Zustand des Multiturn-Drehgebers (10) zur Unterdrückung eines Schaltens des Magnetschaltelements (32) bestromt ist und im ausgeschalteten Zustand nicht bestromt ist.

2. Multiturn-Drehgeber nach Anspruch 1, **dadurch gekennzeichnet, dass** im eingeschalteten Zustand die Anzahl der Umdrehungen der Welle (16) durch das Zählen der Positionssignale ermittelbar ist.

3. Multiturn-Drehgeber nach einem der vorhergehenden Ansprüche, **dadurch gekennzeichnet, dass** das Magnetschaltelement (32) ein Reed-Schalter (32) ist.

4. Multiturn-Drehgeber nach einem der vorhergehenden Ansprüche, **dadurch gekennzeichnet, dass** die Spule (44) in unmittelbarer Nähe des Magnetschaltelements (32) angeordnet ist.

5. Multiturn-Drehgeber nach einem der vorhergehenden Ansprüche, **dadurch gekennzeichnet, dass** das Magnetschaltelement (32) zumindest bereichsweise im Innem der Spule (44) angeordnet ist.

6. Multiturn-Drehgeber nach einem der vorhergehenden Ansprüche, **dadurch gekennzeichnet, dass** das magnetische Schaltfeld der zweiten Abtasteinheit von einem Permanentmagneten (238) erzeugt ist.

7. Multiturn-Drehgeber nach Anspruch 6, **dadurch gekennzeichnet, dass** der Permanentmagnet (238) drehfest mit der Welle (16) des Drehgebers (10) verbunden ist.

8. Multiturn-Drehgeber nach Anspruch 6, **dadurch gekennzeichnet, dass** der Permanentmagnet (38) drehgebergehäusefest gelagert ist und das magnetische Schaltfeld durch auf einer Maßverkörperung (36) aufgebrachtes ferromagnetisches Material (42), das an dem Permanentmagneten (38) vorbeibewegt wird, veränderbar ist.

9. Multiturn-Drehgeber nach einem der vorhergehenden Ansprüche, **dadurch gekennzeichnet, dass** zwei Magnetschaltelemente (32 und 32.2; 132.1 und 132.2) vorgesehen sind.

10. Multiturn-Drehgeber nach einem der vorhergehenden Ansprüche, **dadurch gekennzeichnet, dass** im eingeschalteten Zustand der gesamte oder ein Teil des Versorgungsstromes des Multiturn-Drehgebers (10) über die Spule (44) geleitet wird.

11. Multiturn-Drehgeber nach Anspruch 10, **dadurch gekennzeichnet, dass** die Spule (44) als Drosselspule für die Dämpfung von hochfrequenten Schwingungen auf der Versorgungsleitung dient.

12. Multiturn-Drehgeber nach einem der vorhergehenden Ansprüche, **dadurch gekennzeichnet, dass** die Funktionalität des Magnetschaltelements (32) bei Betriebsbeginn verifizierbar ist, indem nach Einschalten des Multiturn-Drehgebers (10) die Spule (44) zunächst stromlos bleibt, und dass der Schaltpunkt des Magnetschaltelements (32) verglichen wird mit den jeweiligen Positionssignalen der ersten Abtasteinheit (18) und dass bei Abweichungen des Schaltpunkts des Magnetschaltelements (32) zu den Positionssignalen um mehr als eine definierte Positionsdifferenz ΔP ein Fehlersignal ausgegeben wird.

## Claims

1. Multiturn rotary transducer with a material measure which is connected fixed in terms of rotation to a shaft (16) and which is scanned by means of a first scanning unit (18) which generates position signals which describe the angular position or the change in the angular position of the shaft (16), and having a second scanning unit (30) for measuring the number of revolutions of the shaft (16), with the second scanning unit (30) having at least one magnet (38) and at least one magnet switching element (32), **characterized in that** at least one coil (44) is assigned to the magnet switching element (32) and, in the switched-on state of the multiturn rotary transducer (10), said coil (44) is energized in order to suppress switching of the magnet switching element (32), and is not energized in the switched-off state.

2. Multiturn rotary transducer according to Claim 1, **characterized in that** in the switched-on state the number of revolutions of the shaft (16) can be determined by counting the position signals.

3. Multiturn rotary transducer according to one of the preceding claims, **characterized in that** the magnet switching element (32) is a reed switch (32).

4. Multiturn rotary transducer according to one of the preceding claims, **characterized in that** the coil (44) is arranged in the direct vicinity of the magnet switching element (32).

5. Multiturn rotary transducer according to one of the preceding claims, **characterized in that** the magnet switching element (32) is arranged at least partially in the interior of the coil (44).

6. Multiturn rotary transducer according to one of the preceding claims, **characterized in that** the magnetic switching field of the second scanning unit is generated by a permanent magnet (238).

7. Multiturn rotary transducer according to Claim 6, **characterized in that** the permanent magnet (238) is connected fixed in terms of rotation to the shaft (16) of the rotary transducer (10).

8. Multiturn rotary transducer according to Claim 6, **characterized in that** the permanent magnet (38) is mounted fixed to the rotary transducer housing, and the magnetic switching field can be varied by ferromagnetic material (42) which is applied to a material measure (36) and is moved passed a permanent magnet (38).

9. Multiturn rotary transducer according to one of the preceding claims, **characterized in that** two magnet switching elements (32 and 32.2; 132.1 and 132.2) are provided.

10. Multiturn rotary transducer according to one of the preceding claims, **characterized in that** in the switched-on state the entire supply current, or part of the supply current, of the multiturn rotary transducer (10) is conducted via the coil (44).

11. Multiturn rotary transducer according to Claim 10, **characterized in that** the coil (44) serves as a throttle coil for damping high-frequency oscillations on the supply line.

12. Multiturn rotary transducer as claimed in one of the preceding claims, **characterized in that** the functionality of the magnet switching element (32) can be verified at the start of operation by the coil (44) initially remaining currentless after the multiturn rotary transducer (10) has been switched on, and **in that** the switching point of the magnet switching element (32) is compared with the respective position signals of the first scanning unit (18), and **in that** when there are deviations in the switching point of the magnet switching element (32) with respect to the position signals by more than a defined position difference ΔP a fault signal is output.

## Revendications

1. Codeur de rotation multitour avec un élément de représentation dimensionnelle qui est relié en solidarité de torsion avec un arbre (16) et qui fait l'objet d'une détection au moyen d'une première unité de détection (18) générant des signaux de position qui indiquent la position angulaire ou la modification de la position angulaire de l'arbre (16) et avec une deuxième unité de détection (30) pour la mesure du nombre de tours de rotation de l'arbre (16), la deuxième unité de détection (30) comprenant au moins un aimant (38) et au moins un élément magnétique de commutation (32), **caractérisé en ce qu'**à l'élément magnétique de commutation (32) est attribuée au moins une bobine (44) qui est mise sous tension dans l'état de marche du codeur de rotation multitour (10) pour supprimer une commutation de l'élément magnétique de commutation (32) et qui n'est pas mise sous tension dans l'état d'arrêt.

2. Codeur de rotation multitour selon la revendication 1, **caractérisé en ce qu'**en état de marche, le nombre de tours de rotation de l'arbre (16) peut être déterminé par le comptage des signaux de position.

3. Codeur de rotation multitour selon l'une quelconque des revendications précédentes, **caractérisé en ce que** l'élément magnétique de commutation (32) est un commutateur Reed (32).

4. Codeur de rotation multitour selon l'une quelconque des revendications précédentes, **caractérisé en ce que** la bobine (44) est disposée à proximité directe de l'élément magnétique de commutation (32).

5. Codeur de rotation multitour selon l'une quelconque des revendications précédentes, **caractérisé en ce que** l'élément magnétique de commutation (32) est disposé au moins par zones à l'intérieur de la bobine (44).

6. Codeur de rotation multitour selon l'une quelconque des revendications précédentes, **caractérisé en ce que** la zone magnétique de commutation de la deuxième unité de détection est générée par un aimant permanent (238).

7. Codeur de rotation multitour selon la revendication 6, **caractérisé en ce que** l'aimant permanent (238) est relié en solidarité de rotation avec l'arbre (16) du codeur de rotation (10).

8. Codeur de rotation multitour selon la revendication 6, **caractérisé en ce que** l'aimant permanent (38) est logé en solidarité avec le boîtier du codeur de rotation et **en ce que** la zone magnétique de commutation peut être modifiée par du matériau ferromagnétique (42) qui est placé sur un élément de représentation dimensionnelle (36) et qui est déplacé devant l'aimant permanent (38).

9. Codeur de rotation multitour selon l'une quelconque des revendications précédentes, **caractérisé en ce que** deux éléments magnétiques de commutation (32 et 32.2 ; 132.1 et 132.2) sont prévus.

10. Codeur de rotation multitour selon l'une quelconque des revendications précédentes, **caractérisé en ce qu'**en état de marche, l'ensemble ou une partie du courant d'alimentation du codeur de rotation multitour (10) est guidé à travers la bobine (44).

11. Codeur de rotation multitour selon la revendication 10, **caractérisé en ce que** la bobine (44) sert de bobine d'inductance pour l'atténuation d'oscillations à haute fréquence dans la ligne d'alimentation.

12. Codeur de rotation multitour selon l'une quelconque des revendications précédentes, **caractérisé en ce qu'**au début du fonctionnement, la fonctionnalité de l'élément magnétique de commutation (32) est vérifiable par le fait qu'après la mise en marche du codeur de rotation multitour (10), la bobine (44) reste d'abord sans courant, que le point de commutation de l'élément magnétique de commutation (32) est comparé avec les signaux de position respectifs de la première unité de détection (18) et qu'un signal de défaut est émis en cas d'écarts excédant une différence de position définie ΔP entre le point de commutation de l'élément magnétique de commutation (32) et les signaux de position.
